# EUROPÄISCHE PATENTSCHRIFT

(11) **EP 3 673 571 B1**
(45) Veröffentlichungstag und Bekanntmachung des Hinweises auf die Patenterteilung: **05.01.2022**
(21) Anmeldenummer: 18762776.5
(22) Anmeldetag: 16.08.2018
(51) Int. Cl.: H02K 15/12, B29C 33/62

(54) **VERFAHREN ZUM HERSTELLEN VON ISOLIERTEN WICKLUNGSELEMENTEN**
METHOD FOR MANUFACTURING INSULATED WINDING ELEMENTS
PROCEDE DE FABRICATION D'ELEMENTS D'ENROULEMENTS ISOLES

(30) Priorität: 23.08.2017 DE 102017119248
(43) Veröffentlichungstag der Anmeldung: 01.07.2020
(73) Patentinhaber: Voith Patent GmbH, 89522 Heidenheim (DE)
(72) Erfinder: JACOB DA SILVA, Marcelo, 05131-30 Sao Paulo (BR); GONCALVES DOS SANTOS, Camila, 05588-000 Sao Paulo (BR); KOREEDA AOKI, Tamy, 04064-005 Sao Paulo (BR); PEREIRA, Fernando, 02992-200 Sao Paulo (BR); ERIKSON LAMAS, Tomas, 13215040 Jundiai (BR); JOSE FARIA, Egidio, 04708-010 Sao Paulo (BR); HILDINGER, Thomas, 06543-150 Santana (BR); FIORINO CORDEIRO, Joao, 13230-650 Campo Limpo Paulista - SP (BR)
(86) Internationale Anmeldenummer: PCT/EP2018/072180
(87) Internationale Veröffentlichungsnummer: WO 2019/038166

(56) Entgegenhaltungen:
- JP-A- S5 717 123
- JP-A- S61 214 750
- US-A- 6 033 724

## Beschreibung

Die vorliegende Erfindung betrifft ein Verfahren zum Herstellen von isolierten Wicklungselementen für eine elektrische Maschine, insbesondere die Formung der Isolation.

Die isolierten Wicklungselemente von großen elektrischen Maschinen befinden sich in Nuten im Blechpaket der elektrischen Maschine. Um eine möglichst gute Passung der isolierten Wicklungselemente in den Nuten zu gewährleisten, muss die Isolierung der Wicklungselemente eine entsprechende äußere Kontur aufweisen. Diese äußere Kontur der Isolation wird während dem Herstellungsprozess dadurch erzeugt, dass ein mit einer Isolation umwickeltes Leitungselements in eine Form gepresst wird. Um die Lagen der Wicklung miteinander zu verkleben und eine dauerhafte Kontur zu gewährleisten, wird das Isolationsmaterial mit Harzen imprägniert, die beim Aushärten zu einem einheitlichen Gefüge erstarren. Dabei kann die Imprägnierung mit den Harzen vor oder nach dem Einlegen des umwickelten Leitungselements in die Pressform erfolgen. In jedem Fall erfolgt das Aushärten des Harzes während sich das Leitungselement in der Pressform befindet. Bei den Wicklungselementen kann es sich um einzelne Leiterstäbe oder um ganze Spulen handeln. Solche Herstellungsverfahren sind aus dem Stand der Technik bekannt. Es wird hierzu beispielhaft auf die CH 182810, CH 345687 und WO 2016/173608 A1 verwiesen. Die JP S 61 214 750 offenbart ein Verfahren zum Herstellen von isolierten Wicklungselementen gemäß dem Oberbegriff des Anspruchs 1.

Beim bekannten Herstellungsprozess kommen die verwendeten Pressformen in direkten Kontakt mit dem Harz. Es ist daher unumgänglich, dass ein Teil des Harzes an den Formen haften bleibt. Vor der Wiederverwendung der Formen müssen diese daher aufwändig gereinigt werden, was einerseits zeitaufwändig ist und andererseits den Einsatz von Lösungsmitteln erfordert, welche in Hinblick auf die Umweltverträglichkeit nicht unproblematisch sind.

Die Erfinder haben sich die Aufgabe gestellt, den bekannten Prozess dahingehend zu verbessern, dass die Zeit für die Reinigung der Pressformen reduziert wird, und weniger bzw. umweltverträglichere Reinigungsmittel benötigt werden.

Die Erfinder haben erkannt, dass die gestellte Aufgabe durch ein Verfahren mit den Merkmalen des Anspruchs 1 gelöst werden kann. Vorteilhafte Ausführungsformen ergeben sich aus den von Anspruch 1 abhängigen Unteransprüchen.

Die erfindungsgemäße Lösung wird nachfolgend anhand von Figuren erläutert. Darin ist im Einzelnen folgendes dargestellt:
- Figur 1: Isolierter Wicklungsstab in Pressform;
- Figur 2: Aufbau einer Pressform für das erfindungsgemäße Verfahren;
- Figur 3: Ablaufdiagramm des erfindungsgemäßen Verfahrens in zwei Ausführungsformen.

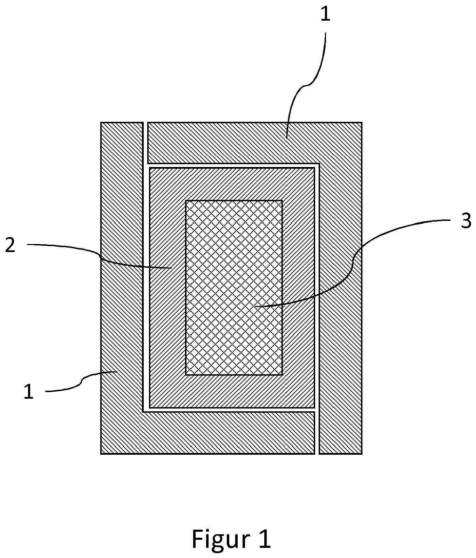

Figur 1 zeigt in schematischer Darstellung einen Schnitt durch einen isolierten Wicklungsstab in einer Pressform. Die Pressform besteht aus zwei Teilformen mit L-förmigem Querschnitt, welche mit 1 bezeichnet sind. Zwischen den beiden Teilformen 1 befindet sich ein isolierter Wicklungsstab, wobei die Isolierung mit 2 und der Leiterstab mit 3 bezeichnet sind. Durch Aneinanderpressen der Teilformen 1 erhält die Isolierung 2 des Wicklungsstabes eine rechteckförmige Kontur, so dass der Wicklungsstab in die vorgesehene Nut des Blechpaketes passt. Es ist anzumerken, dass das erfindungsgemäße Verfahren nicht auf Pressformen mit L-förmigem Querschnitt beschränkt ist, sondern mit allen denkbaren Geometrien von Pressformen ausführbar ist.

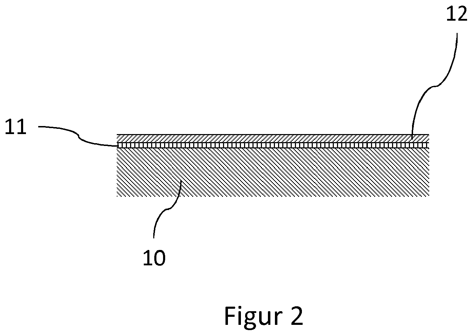

Figur 2 zeigt in schematischer Darstellung den Aufbau einer Pressform zur Verwendung im erfindungsgemäßen Verfahren. Die Pressform umfasst einen metallischen Grundkörper, welcher mit 10 bezeichnet ist. Gewöhnlich besteht der Grundkörper aus Stahl oder Kupfer, wobei auch andere gängige Metalle verwendet werden können. Die Oberflächen der Pressform, die bei der Ausführung des erfindungsgemäßen Verfahrens mit Imprägnier-Harz in Berührung kommen, sind mit einer Beschichtung versehen, welche zwei Teilschichten umfasst. Die erste Schicht, welche sich im direkten Kontakt mit dem Grundkörper 10 befindet, ist eine Grundierung, welche mit 11 bezeichnet ist. Die zweite Teilschicht, welche sich im direkten Kontakt mit der Grundierung 11 befindet, ist eine Antihaftschickt, welche mit 12 bezeichnet ist. Erfindungsgemäß umfasst die Antihaftschicht dabei fluorierte Polyurethane. Fluoriertes Polyurethan haftet auf vielen herkömmlichen Grundierungen. Für andere fluorierte Polymere müssen in der Regel spezielle für das jeweilige fluorierte Polymer entwickelte Grundierungen verwendet werden. Eine Dicke von 40 bis 150 Mikrometer für das System aus Grundierung 11 und Antihaftschicht 12 hat sich als besonders vorteilhaft erwiesen.

Durch die Verwendung einer Antihaftschicht wird die Haftung des Imprägnier-Harzes auf der Oberfläche der Pressform erheblich herabsetzt. Dadurch können die Pressformen nach der Verwendung sehr viel einfacher gereinigt werden, wodurch sich eine Zeiteinsparung von bis zu 80% ergab. Der Materialaufwand reduzierte sich auf Reinigungstücher und milde Lösungsmittel, wodurch sich die Nachhaltigkeit des Verfahrens deutlich erhöht hat. Außerdem wirkt sich die Antihaftschicht auch vorteilhaft auf die Entnahme des isolierten Wicklungselementes aus der Pressform aus, da sich das Wicklungselement leichter aus der Form lösen lässt.

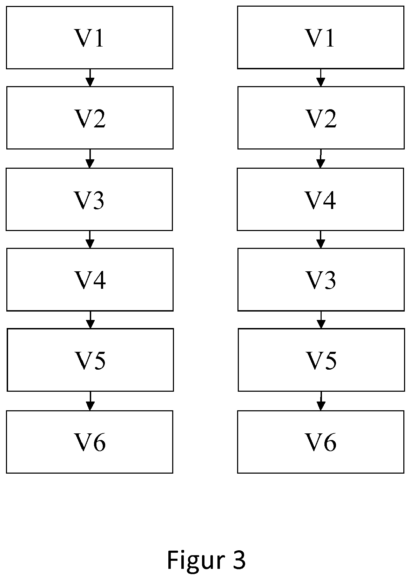

Figur 3 zeigt die Ablaufdiagramme des erfindungsgemäßen Herstellungsverfahrens in zwei unterschiedlichen Ausführungsformen. Die einzelnen Verfahrensschritte sind mit V1 bis V6 bezeichnet. Die Verfahrensschritte beinhalten folgende Tätigkeiten:
V1: Bereitstellen eines Leitungselements
V2: Aufbringen einer Isolierung auf das Leitungselement
V3: Imprägnieren der Isolierung mit Harz
V4: Einlegen des isolierten Wicklungselementes in eine Pressform und Pressen
V5: Aushärten der Imprägnierung
V6: Entnahme des Wicklungselementes aus der Form und Reinigung der Form

Die beiden Ausführungsformen unterscheiden sich lediglich darin, dass in der ersten Ausführungsform der Schritt V3 vor dem Schritt V4 ausgeführt wird, wobei die Reihenfolge der beiden Schritte in der zweiten Ausführungsform umgekehrt ist.

Es ist noch anzumerken, dass es auch Isolationsmaterialien gibt, die bereits mit Harz imprägniert sind. Es ist klar, dass dann der Schritt V3 bereits durch die Bereitstellung eines solchen Isolationsmaterials erfolgt ist.

## Patentansprüche

1. Verfahren zur Herstellung von isolierten Wicklungselementen für eine elektrische Maschine, umfassend die Verfahrensschritte:
V1: Bereitstellen eines Leitungselementes;
V2: Aufbringen einer Isolierung auf das Leitungselement;
V3: Imprägnieren der Isolierung mit Harz;
V4: Einlegen des isolierten Wicklungselementes in eine Pressform (1) und Pressen;
V5: Aushärten der Imprägnierung;
V6: Entnahme des Wicklungselementes aus der Pressform (1) und
Reinigung der Pressform (1);
wobei der Grundkörper (10) der Pressform (1) aus Metall besteht, wobei die Oberflächen der Pressform (1), die während der Ausführung des Verfahrens mit Harz in Berührung kommen, mit einer Beschichtung versehen sind,
**dadurch gekennzeichnet, dass** die Beschichtung zwei Teilschichten (11, 12) umfasst, wobei eine erste Teilschicht (11) sich in direktem Kontakt mit dem Grundkörper (10) befindet und als Grundierung ausgeprägt ist, und
eine zweite Teilschicht (12) sich im direkten Kontakt mit der Grundierung (11) befindet und als Antihaftschicht ausgeprägt ist und fluorierte Polyurethane umfasst.

2. Verfahren nach Anspruch 1, wobei Verfahrensschritt V3 vor dem Verfahrensschritt V4 ausgeführt wird.

3. Verfahren nach Anspruch 1, wobei Verfahrensschritt V4 vor dem Verfahrensschritt V3 ausgeführt wird.

4. Verfahren nach einem der Ansprüche 1 bis 3, wobei die Dicke der Beschichtung zwischen 40 bis 150 Mikrometer beträgt.

5. Verfahren nach einem der Ansprüche 1 bis 4, wobei das Leitungselement ein einzelner Leitungsstab ist.

6. Verfahren nach einem der Ansprüche 1 bis 4, wobei das Leitungselement eine Spule ist.

## Claims

1. A method of manufacturing insulated winding elements for an electric machine, comprising the steps of:
V1: providing a conductive element;
V2: applying an insulation to the conductive element;
V3: impregnating the insulation with resin;
V4: placing the insulated winding element in a press mold (1) and pressing;
V5: Curing of the impregnation;
V6: Removing the winding element from the press mold (1) and cleaning the press mold (1);
wherein the base body (10) of the press mold (1) is made of metal,
wherein the surfaces of the press mold (1) that come into contact with resin during the execution of the process are provided with a coating,
**characterized in that** the coating comprises two partial layers (11, 12),
wherein a first partial layer (11) is in direct contact with the base body (10) and is expressed as a primer, and a second partial layer (12) is in direct contact with the primer (11) and is expressed as an anti-adhesion layer and comprises fluorinated polyurethanes.

2. The method according to claim 1, wherein method step V3 is carried out before method step V4.

3. The method according to claim 1, wherein method step V4 is carried out before method step V3.

4. The method of any one of claims 1 to 3, wherein the thickness of the coating is between 40 to 150 micrometers.

5. The method of any one of claims 1 to 4, wherein the conductive element is a single conductive rod.

6. The method of any one of claims 1 to 4, wherein the conductive element is a coil.

## Revendications

1. Procédé de fabrication d'éléments de bobinage isolés pour une machine électrique, comprenant les étapes de procédé suivantes :
V1 : Fournir un élément conducteur ;
V2 : application d'une isolation sur l'élément conducteur ;
V3 : Imprégnation de l'isolation avec de la résine ;
V4 : mise en place de l'élément d'enroulement isolé dans un moule de pressage (1) et pressage ;
V5 : Durcissement de l'imprégnation ;
V6 : Retrait de l'élément d'enroulement du moule de compression (1) et
nettoyage du moule de compression (1) ;
le corps de base (10) du moule (1) étant en métal, les surfaces du moule (1) qui entrent en contact avec la résine pendant l'exécution du procédé étant pourvues d'un revêtement, **caractérisé en ce que** le revêtement comprend deux couches partielles (11, 12), une première couche partielle (11) se trouvant en contact direct avec le corps de base (10) et se présentant sous la forme d'une couche de fond, et une deuxième couche partielle (12) se trouvant en contact direct avec la couche de fond (11) et se présentant sous la forme d'une couche anti-adhérente et comprenant des polyuréthanes fluorés.

2. Procédé selon la revendication 1, dans lequel l'étape V3 du procédé est exécutée avant l'étape V4 du procédé.

3. Procédé selon la revendication 1, dans lequel l'étape V4 du procédé est exécutée avant l'étape V3 du procédé.

4. Procédé selon l'une quelconque des revendications 1 à 3, dans lequel l'épaisseur du revêtement est comprise entre 40 et 150 micromètres.

5. Procédé selon l'une quelconque des revendications 1 à 4, dans lequel l'élément de conduction est une tige de conduction unique.

6. Procédé selon l'une quelconque des revendications 1 à 4, dans lequel l'élément conducteur est une bobine.
